(19) Europäisches Patentamt
European Patent Office
Office européen des brevets

(11) **EP 1 993 209 B1**

(12) **FASCICULE DE BREVET EUROPEEN**

(45) Date de publication et mention
de la délivrance du brevet:
**03.11.2010  Bulletin 2010/44**

(51) Int Cl.:
***H03M 1/12*** *(2006.01)*

(21) Numéro de dépôt: **07290645.6**

(22) Date de dépôt: **18.05.2007**

(54) **Numériseur pour un système de réception numérique**

Digitizer für ein digitales Empfangssystem

Digitiser for a digital receiver system

(84) Etats contractants désignés:
**DE FR GB IT**

(43) Date de publication de la demande:
**19.11.2008  Bulletin 2008/47**

(73) Titulaires:
- **STMICROELECTRONICS SA**
  **92120 Montrouge (FR)**
- **STMicroelectronics Srl**
  **20041 Agrate Brianza (MB) (IT)**

(72) Inventeurs:
- **Chiricosta, Mario**
  **98121 Messina (IT)**

- **Sirito-Olivier, Philippe**
  **13500 Carro Par Martiguez (FR)**
- **Calo', Pietro Antonio Paolo**
  **74014 Laterza**
  **Taranto (IT)**

(74) Mandataire: **Ferrari, Barbara**
**Botti & Ferrari S.r.l.**
**Via Cappellini, 11**
**20124 Milano (IT)**

(56) Documents cités:
**GB-A- 2 338 850      JP-A- 7 321 704**
**JP-A- 61 005 229     US-A- 5 003 196**
**US-A- 6 008 749**

## Description

Domaine d'application

La présente invention se réfère à un numériseur pour un système de réception numérique.

Plus spécifiquement, l'invention se réfère à un numériseur ayant un terminal d'entrée qui reçoit un signal de tension d'entrée analogique modulé et un terminal de sortie qui transmet un signal de sortie étant une conversion numérique du signal de tension d'entrée et qui comporte un circuit comparateur et un circuit générateur à seuil.

L'invention se réfère aussi à une méthode pour numériser une tension d'entrée analogique modulée dans un système de réception numérique moyennant le numériseur.

Particulièrement, mais pas exclusivement, l'invention se réfère à un numériseur pour un récepteur optique et la description suivante n'est faite qu'à titre d'explication eu égard au domaine d'application susdit.

Art antérieur

Comme on sait bien, un récepteur numérique est un système électronique pour communications numériques recevant un signal d'entrée de tension analogique et transmettant un signal de sortie numérique, et comportant un amplificateur, un filtre et un numériseur à son extrémité frontale analogique.

En particulier, l'amplificateur maximise la portée dynamique d'entrée de la tension du récepteur, ce qui garantit un bon niveau du signal de sortie analogique. Par ailleurs, le filtre limite l'amplitude de bande du bruit du récepteur et le numériseur convertit le signal d'entrée de tension analogique dans le signal de sortie numérique.

Le numériseur peut être réalisé soit en utilisant un simple comparateur soit en utilisant un « Convertisseur Analogique à Numérique » plus sophistiqué, selon les caractéristiques du signal d'entrée. En particulier, un comparateur simple peut être utilisé pour distinguer deux niveaux de signaux de tension différents, comme c'est le cas pour un récepteur numérique ayant comme signal de tension d'entrée un signal de modulation ASK [Amplitude Shift Keying], ayant un décalage d'amplitude entre zéro et une tension d'alimentation Vdd, ou un signal de modulation OOK [On-Off Keying].

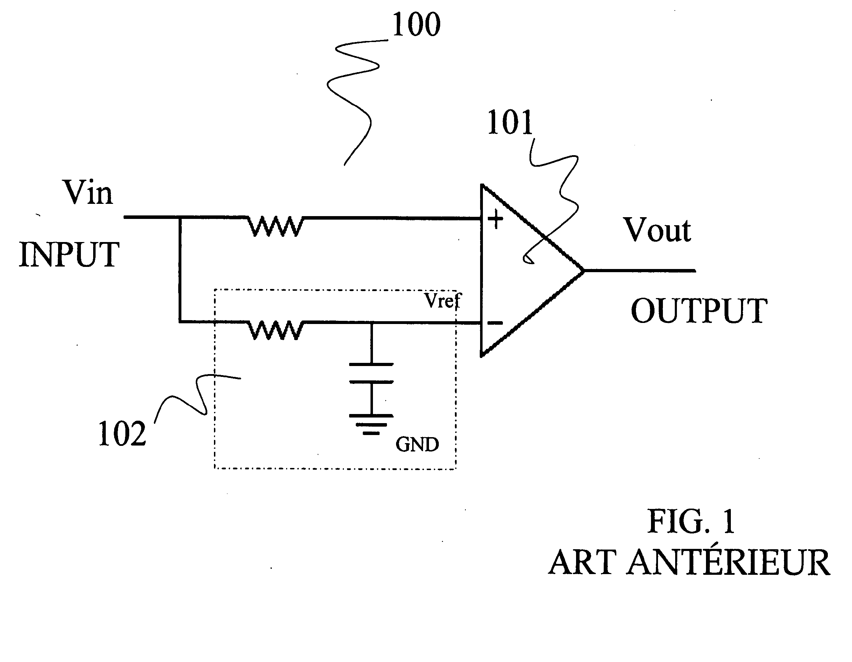

Un numériseur connu 100 est montré dans la figure 1. Il est muni d'un terminal d'entrée INPUT qui reçoit un signal de tension d'entrée analogique modulé Vin et d'un terminal de sortie OUTPUT qui transmet un signal de sortie Vout étant une conversion numérique du signal de tension d'entrée Vin.

Le numériseur 100 comporte aussi un filtre R-C 102 qui extrait le composant en courant continu (CC) du signal d'entrée de tension analogique Vin et le transmet à un comparateur 101 sous forme d'un signal de référence de tension Vref.

Cette solution circuitale vraiment simple réalisant le numériseur 100 assure que le signal de référence de tension Vref est réglé entre les niveaux des signaux de tension correspondant à un « 0 » logique transmis et au « 1 » logique transmis. Néanmoins, la limite de cette solution réside dans le fait qu'elle fonctionne bien tant que les données reçues sont raisonnablement balancées au niveau de courant continu ou mieux lorsque le signal de référence de tension Vref est plus ou moins dans une position symétrique entre le minimum et le maximum du signal d'entrée.

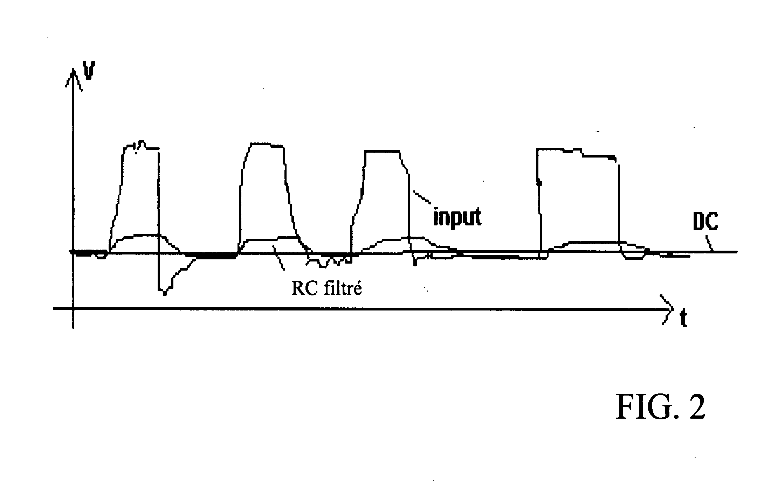

En effet, tel qu'il ressort clairement de la réponse du numériseur 100, montré dans la figure 2, si le signal d'entrée de tension analogique Vin n'est pas symétrique par rapport à la valeur du composant en courant continu, le signal de référence de tension Vref ne devrait pas être un bon signal de référence de tension pour le comparateur 101. En outre, même la marge du bruit est très faible, parce qu'un signal d'entrée de tension analogique Vin très faible serait vraiment proche du signal de référence de tension Vref aboutissant à l'instabilité du comparateur.

Afin de résoudre ce problème, d'autres architectures ont été proposées. Par exemple, le brevet US N° 5,003,196 décrit un circuit à déclenchement ou trigger Schmitt comportant un détecteur de tension maximum et minimum et deux comparateurs, captant les fronts montants et descendants du signal de tension d'entrée Vin et les convertissant dans un signal numérique de sortie au moyen d'un circuit flip-flop/bascule SR (Set/Reset).

Même sous plusieurs aspects avantageux, le circuit à déclenchement Schmitt décrit ci-dessus ne peut pas être utilisé dans certaines typologies d'applications, comme c'est le cas, par exemple, pour les récepteurs optiques.

Le problème technique de la présente invention réside dans le fait de proposer un numériseur et une méthode de numérisation ayant des caractéristiques structurelles et fonctionnelles qui permettent de numériser aussi bien un signal de tension d'entrée fort qu'un signal de tension d'entrée faible sans aucune répercussion sur le signal du bruit lorsque le signal de tension d'entrée est nul, ce qui permet de surmonter les limites qui affligent toujours les dispositifs réalisés selon l'art antérieur.

Résumé de l'invention

L'idée de solution à la base de la présente invention réside dans le fait de proposer une conversion numérique adaptative du signal de tension d'entrée appliqué à un terminal d'entrée d'un numériseur, ladite conversion dépendant de la somme d'un signal de tension constante et d'une valeur maximum du signal de tension d'entrée, afin d'éviter la génération d'un signal de sortie lorsque seul un signal de bruit est appliqué au terminal d'entrée.

Sur la base d'une telle idée de solution, le problème technique est résolu par un numériseur, tel qu'il a été précédemment indiqué et défini par la partie caractérisante de la revendication 1.

Le problème est aussi résolu par une méthode de numérisation telle qu'elle a été précédemment indiquée et définie par la partie caractérisante de la revendication 11.

Les caractéristiques et avantages du numériseur et de la méthode de numérisation selon l'invention s'avéreront évidents à partir de la description suivante d'une réalisation de ceux-ci à titre d'exemple indicatif et non limitatif en référence aux dessins joints en annexe.

Brève description des dessins

Dans ces dessins :

La Figure 1 montre schématiquement un numériseur selon l'art antérieur ;

La Figure 2 montre schématiquement la forme du signal d'entrée et des signaux internes d'un numériseur selon l'art antérieur ;

La Figure 3 montre schématiquement le numériseur selon l'invention ;

La Figure 4 montre schématiquement une implémentation circuitale du numériseur selon l'invention ;

La Figure 5 montre schématiquement la forme du signal d'entrée et des signaux internes du numériseur selon l'invention.

Description détaillée

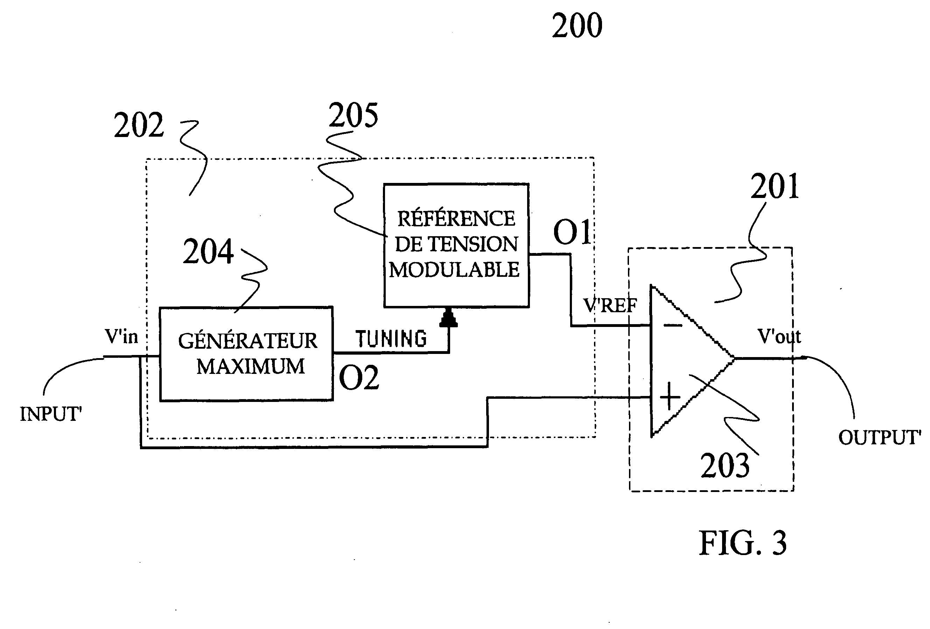

En référence audites figures, et notamment à la Figure 3, un numériseur pour un système de réception numérique, tel qu'un récepteur optique, est montré à titre d'exemple, globalement et schématiquement désigné par 200.

Les mêmes numéros de référence seront appliqués aux éléments structurellement et/ou fonctionnellement égaux par rapport aux circuits décrits dans la section de l'art antérieur.

Le numériseur 200 a un terminal d'entrée INPUT' qui reçoit un signal de tension d'entrée analogique modulé V'in, et un terminal de sortie OUTPUT' qui transmet un signal de tension de sortie V'out étant une conversion numérique du signal de tension d'entrée V'in.

Le numériseur 200 comporte un circuit générateur à seuil 202 et un circuit comparateur 201 introduits, en série l'un par rapport à l'autre, entre le terminaux d'entrée et de sortie, INPUT' et OUTPLTT'.

En particulier, le circuit comparateur 201 comporte un amplificateur opérationnel 203 ayant un terminal sans inversion (+), directement branché à un terminal d'entrée INPUT' et à un terminal d'inversion (-) ainsi qu'un terminal de sortie branché au terminal de sortie OUTPUT' du numériseur 200.

Le circuit générateur à seuil 202 est introduit à son tour entre le terminal d'entrée INPUT' du numériseur 200 et le terminal d'inversion (-) de l'amplificateur opérationnel 203. Le circuit générateur à seuil 202 transmet un signal de référence de tension modulable V'REF à son terminal de sortie O1 branché au terminal d'inversion (-) de l'amplificateur opérationnel 203.

Avantageusement selon l'invention, le circuit générateur à seuil 202 comporte une série d'un circuit générateur maximum 204 pour déterminer une valeur maximum Vmax du signal de tension d'entrée analogique modulé V'in, et d'un circuit de référence de tension modulable 205 pour générer le signal de référence de tension modulable V'REF en tant que fonction d'une telle valeur maximum Vmax du signal de tension d'entrée analogique modulé V'in.

En particulier, le circuit générateur maximum 204 a un terminal de sortie 02 branché au terminal d'entrée du circuit de référence de tension modulable 205 et lui transmettant un signal de contrôle TUNING étant une fonction de la valeur maximum Vmax du signal de tension d'entrée analogique modulé V'in.

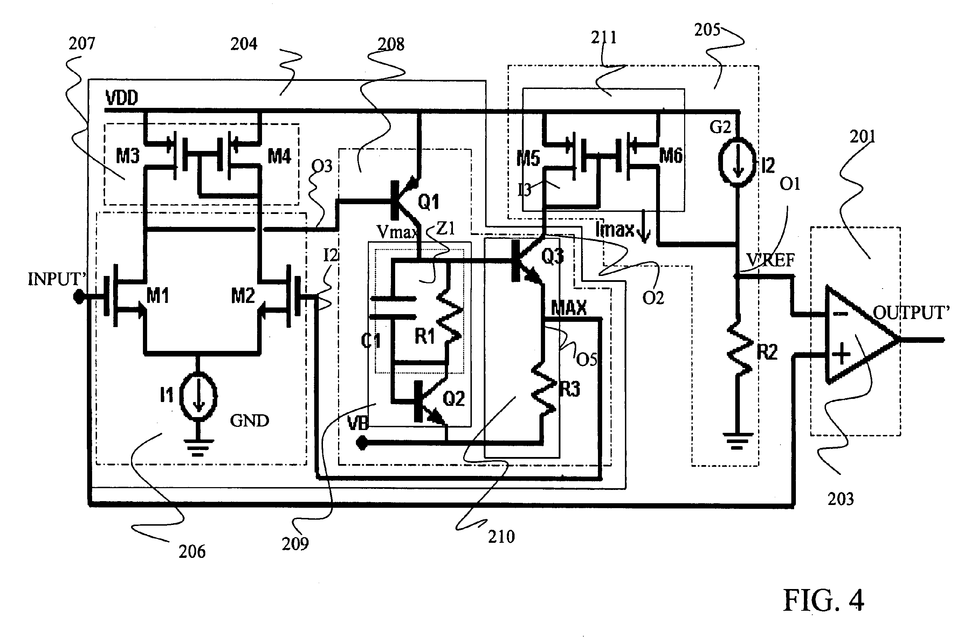

La Figure 4 montre une implémentation circuitale préférée du numériseur 200. Il faudrait remarquer que la description suivante du numériseur 200 ne devrait pas s'entendre d'une façon limitative, puisqu'elle n'est donnée qu'à titre d'exemple.

Avantageusement selon l'invention, le circuit générateur maximum 204 comporte : un circuit de phase d'entrée différentiel 206 ayant un premier terminal d'entrée couplé au terminal d'entrée INPUT' du numériseur 200 ; un circuit du miroir de courant 207 branché à une première référence de tension d'alimentation VDD et couplé au circuit de phase d'entrée différentiel 206 ; un second circuit de phase 208 couplé au circuit de phase d'entrée différentiel 206 en correspondance d'un terminal de sortie 03 et d'un second terminal d'entrée I2, et branché au terminal de sortie 02 du circuit générateur maximum 204.

Le circuit de phase d'entrée différentiel 206 et le circuit du miroir de courant 207 sont du type bien connu de l'art antérieur et peuvent alternativement comporter des transistors bipolaires ou CMOS.

Plus particulièrement, le second circuit de phase 208 est introduit entre la première référence de tension d'alimentation VDD et une ultérieure référence de tension VB, ayant notamment une valeur constante, et comporte un transistor d'entrée Q1 agissant comme une seconde phase d'amplification et ayant un terminal de contrôle couplé audit circuit de phase d'entrée différentiel 206 en correspondance du terminal de sortie 03, un premier terminal de courant de conduction branché à la référence de tension d'alimentation VDD et un second terminal de conduction donnant une valeur de tension maximum Vmax du signal de tension d'entrée analogique modulé V'in.

Le second circuit de phase 208 comporte aussi un circuit du filtre 209, introduit entre le second terminal de conduction du transistor d'entrée Q1 et l'autre référence de tension constante VB. Le circuit du filtre 209 comporte à son tour un filtre Z1 sous forme d'impédance en série avec un transistor branché à diodes Q2.

Plus particulièrement, le filtre Z1 comporte un condensateur C1 et une résistance R1 branchés, parallèlement l'un à l'autre, entre le second terminal de conduction du transistor d'entrée Q1 et un premier terminal de conduction du transistor branché à diodes Q2.

Le rôle du transistor branché à diodes Q2 est de rétablir le bon niveau de la tension du courant continu, ce qui garantit qu'aucun courant n'est pas en train de passer par le circuit du filtre 209, lorsque le signal de tension d'entrée analogique modulé V'in est nul.

De cette façon, le circuit du filtre 209 est capable de prérégler une constante de temps du circuit générateur maximum 204, qui dépend des caractéristiques du signal de tension d'entrée analogique, telles que, par exemple, l'ampleur des impulsions, la période et la trame reçue.

Le second circuit de phase 208 comporte aussi un circuit de conversion tension-courant 210 introduit entre un terminal de sortie du second circuit de phase 208 (qui est branché au terminal de sortie 02 du circuit générateur maximum 204) et l'autre référence de tension constante VB, et ayant un terminal de sortie 05 branché en contre-réaction au second terminal d'entrée 12 du circuit de phase d'entrée différentiel 206.

Plus particulièrement, le circuit de conversion tension-courant 210 comporte un transistor buffer Q3 en série avec une résistance de dégénération R3 y étant insérée, en série l'un par rapport à l'autre, entre le terminal de sortie 02 du circuit générateur maximum 204 et l'autre référence de tension constante VB et interconnectés en correspondance du terminal de sortie 05. Le transistor buffer Q3 a un terminal de contrôle branché au second terminal de conduction du transistor d'entrée Q1 du second circuit de phase 208.

De cette façon, le circuit de conversion tension-courant 210 transforme la valeur de tension maximum Vmax du signal de tension analogique modulé d'entrée V'in reçu du transistor d'entrée Q1 dans une valeur de courant maximum I3, égale au rapport entre la valeur de tension maximum Vmax et une valeur de résistance de la résistance de dégénération R3, cette valeur de courant étant donnée au terminal de sortie 02 du circuit générateur maximum 204.

Il s'ensuit qu'à l'intérieur du circuit générateur maximum 204, le signal d'entrée analogique modulé V'in est transféré au terminal de sortie 03 du circuit de phase d'entrée différentiel 206 et ensuite au terminal de contrôle du transistor d'entrée Q1 qui extrait la valeur de tension maximum Vmax ; le second circuit de phase 208 filtre par la suite ce signal de tension grâce au circuit du filtre 209 et le convertit dans une valeur de courant maximum I3 qui passe depuis le circuit de conversion tension-courant 210 vers le terminal de sortie 02 et donc vers le circuit de référence de la tension modulable 205.

Avantageusement selon l'invention, le circuit de référence de tension modulable 205 comporte : un circuit du miroir de courant 211 introduit entre la tension d'alimentation VDD et le terminal de sortie 02 du circuit générateur maximum 204 et branché au terminal d'inversion (-) de l'amplificateur opérationnel 203 du circuit comparateur 201 ; une source de courant G2 introduite entre la tension d'alimentation VDD et la sortie du circuit du miroir de courant 211 et branché au terminal d'inversion (-) de l'amplificateur opérationnel 203 ; et une résistance de sortie R2 introduite entre le terminal d'inversion (-) de l'amplificateur opérationnel 203 et le second référence de tension GND.

Le circuit du miroir de courant 211 est du type bien connu dans l'art antérieur et peut alternativement comporter des transistors bipolaires ou CMOS.

De cette façon, le circuit du référence de tension modulable 205 donne une valeur de courant maximum miroité Imax, ceci étant une copie de la valeur de courant maximum I3=Vmax/R3, telle qu'elle est reçue par le circuit générateur maximum 204, en plus d'un courant constant I2 donné par la source de courant G2, et convertit une telle somme de courants en passant par la résistance de sortie R2 dans le signal de référence de tension modulable V'REF appliqué au terminal d'inversion (-) de l'amplificateur opérationnel 203.

Par conséquent, le signal de référence de tension modulable V'REF transmis par le circuit de référence de tension modulable 205 est égal à la somme de la valeur du courant maximum miroité Imax et de la valeur de la source du courant I2, multipliée par la valeur de la résistance de sortie R2, selon l'équation :

$$(\text{Imax}+\text{I2})\times\text{R2}.$$

Il faudrait remarquer que, par la résistance de dégénération R3, la variation de la valeur du courant maximum miroité Imax face au signal d'entrée analogique modulé V'in peut être réglée. Par ailleurs, les valeurs de la résistance de sortie R2 et du courant constant I2 données par la source de courant G2 peuvent être choisies afin d'optimiser le signal de référence de tension modulable V'REF pour garantir une bonne marge de bruit lorsque le signal d'entrée analogique modulé V'in est très proche du seuil du bruit.

De cette façon, lorsqu'un signal de tension analogique modulé V'in est appliqué au terminal d'entrée ENTREE' du numériseur 200, le circuit générateur à seuil 202 génère un signal de référence de tension modulable V'REF, ceci étant un rapport entre la valeur maximum Vmax du signal de tension analogique modulé V'in et le composant en courant continu du signal de tension analogique modulé V'in, et le transmet au terminal d'inversion (-) de l'amplificateur opérationnel 203.

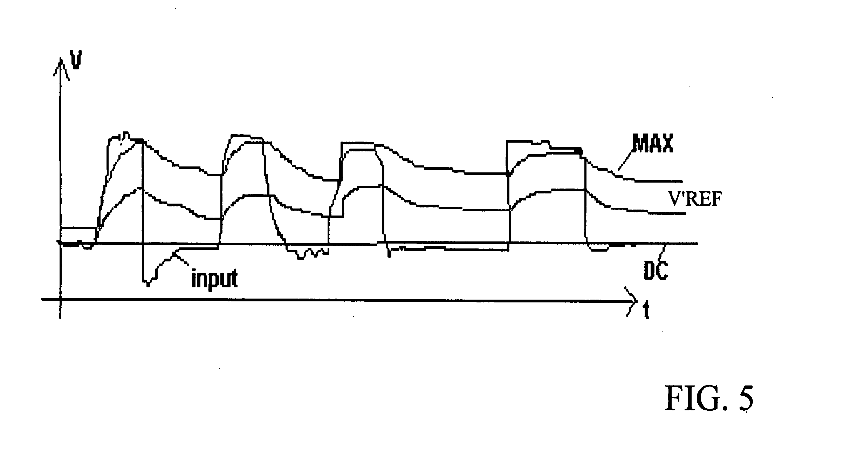

La Figure 5 montre la forme d'un signal d'entrée et des signaux internes du numériseur 200 selon l'invention et, en particulier, le signal de tension d'entrée analogique modulé V'in (indiqué comme entrée) ; le maximum du signal de tension d'entrée analogique modulé V'in (indiqué comme MAX) ; le composant en courant continu du signal de tension d'entrée analogique modulé V'in (indiqué comme DC) ; le signal de référence de tension modulable V'REF.

Il est donc immédiatement évident que le signal de référence de tension modulable V'REF a une valeur comprise entre la valeur la plus faible et la valeur la plus forte du signal de tension d'entrée analogique modulé V'in, ceci étant la valeur la plus faible prise en compte en tant que composant en courant continu.

Finalement, le circuit comparateur 201, par l'amplificateur opérationnel 203, compare le signal de tension d'entrée analogique modulé V'in et le signal de référence de tension modulable V'REF afin de générer le signal de tension de sortie V'out, ceci étant une conversion numérique du signal de tension d'entrée analogique modulé V'in.

L'invention se réfère aussi à une méthode pour numériser le signal de tension d'entrée analogique modulé V'in au moyen du numériseur 200 décrit. Plus particulièrement, la méthode comporte les phases de :

transmission du signal de tension d'entrée analogique modulé V'in sur le terminal d'entrée INPUT' du numériseur 200 ;

génération d'un signal de tension de seuil depuis le signal de tension d'entrée analogique module V'in ; et

comparaison du signal de tension d'entrée analogique modulé V'in et le signal de tension de seuil afin de générer un signal de tension de sortie V'out, ceci étant une conversion numérique du signal de tension d'entrée V'in.

Avantageusement selon l'invention, la phase de génération d'un signal de tension de seuil comporte les phases de détermination de la valeur de tension maximum Vmax du signal de tension d'entrée analogique modulé V'in et de génération du signal de référence de tension modulable V'REF depuis ladite valeur de tension maximum Vmax, le signal de référence de tension modulable V'REF étant adaptable au signal de tension d'entrée analogique modulé V'in.

Par ailleurs, la phase de détermination de la valeur de tension maximum Vmax comporte les phases de :

transfert du signal de tension d'entrée analogique maximum V'in au terminal de sortie 03 du circuit de phase d'entrée différentiel 206 ;

extraction de la valeur de tension maximum Vmax moyennant la filtration du signal tel qu'il est reçu du circuit de phase d'entrée différentiel 206 par le second circuit de phase 208 du circuit générateur maximum 204 ; et

conversion de la valeur de tension maximum Vmax dans la valeur de courant maximum I3, telle qu'elle a été décrite ci-dessus eu égard au fonctionnement du numériseur 200.

En particulier, la phase de génération du signal de référence de tension modulable V'REF comporte aussi les phases de :

miroitage de la valeur de courant maximum I3 dans une valeur de courant maximum miroité Imax ;

somme de la valeur de courant maximum miroité Imax et de la valeur de courant constant I2 ;

conversion de la somme dans le signal de référence de tension modulable V'REF.

Le numériseur et la méthode s'y rapportant surmontent substantiellement les inconvénients qui affligent les solutions connues et assurent plusieurs avantages.

En particulier, le numériseur 200 selon l'invention permet de générer une référence de tension modulable, qui est adaptable au signal de tension d'entrée modulé.

Par conséquent, le seuil dynamique généré permet de conserver l'ampleur des impulsions des bits numérisés même si l'ampleur du signal d'entrée est en train de changer.

Par ailleurs, le numériseur 200 selon l'invention garantit une bonne marge de bruit lorsque le signal d'entrée est très proche du seuil du bruit. En particulier, la marge du bruit devient adaptative, ce qui garantit une grande portée dynamique d'entrée et un meilleur signal par-dessus le rapport du bruit.

**Revendications**

1. Numériseur (200) pour un système de réception numérique ayant un terminal d'entrée (INPUT') qui reçoit un signal de tension d'entrée analogique modulé (V'in) et un terminal de sortie (OUTPUT) qui transmet un signal de tension de sortie (V'out), ceci étant une conversion numérique dudit signal de tension d'entrée (V'in) et comportant :

un circuit comparateur (201) ayant un terminal de sortie branché audit terminal de sortie (OUTPUT') dudit numériseur (200) et comportant au moins un amplificateur opérationnel (203) ayant un terminal sans inversion (+) et un terminal d'inversion (-), ledit terminal sans inversion (+) étant couplé audit terminal d'entrée (INPUT') dudit numériseur (200), et

un circuit générateur de seuil (202) introduit entre ledit terminal d'entrée (INPUT') dudit numériseur (200) et ledit terminal sans inversion (+) dudit amplificateur opérationnel (203), ledit circuit générateur de seuil (202) transmettant un signal de référence de tension modulable (V'REF) à un terminal de sortie (01) audit terminal d'inversion (-) dudit amplificateur opérationnel (203) ;

**caractérisé en ce que**

ledit circuit générateur de seuil (202) comporte une série de circuits générateurs de maximum (204) pour déterminer une valeur de tension maximum (Vmax) dudit signal de tension d'entrée analogique modulé (V'in), et d'un circuit de référence de tension modulable (205) pour générer ledit signal de référence de tension modulable (V'REF) en tant que fonction de ladite valeur maximum dudit signal de tension d'entrée analogique modulé (V'in).

**2.** Numériseur selon la revendication 1, **caractérisé en ce que** ledit circuit générateur maximum (204) a un terminal de sortie (02) branché au terminal d'entrée dudit circuit référence de tension modulable (205) et y transmettant un signal de contrôle (TUNING), ceci étant une fonction de ladite valeur maximum dudit signal de tension d'entrée analogique modulé (V'in).

**3.** Numériseur selon la revendication 2, **caractérisé en ce que** ledit circuit générateur maximum (204) comporte :

un circuit de phase d'entrée différentiel (206) couplé audit terminal d'entrée (INPUT') dudit numériseur (200) ;

un circuit du miroir de courant (207) branché à une première référence de tension d'alimentation (VDD) et couplé audit circuit de phase d'entrée différentiel (206) ;

un second circuit de phase (208) couplé audit circuit de phase d'entrée différentiel (206) en correspondance d'au moins un terminal d'entrée et un terminal de sortie (12, O3) de celui-ci et branché audit terminal de sortie (02).

**4.** Numériseur selon la revendication 3, **caractérisé en ce que** ledit second circuit de phase (208) est introduit entre ladite référence de tension d'alimentation (VDD) et un autre référence de tension (VB) et qu'il comporte :

un transistor d'entrée (Q1) ayant un terminal de contrôle couplé audit circuit de phase d'entrée différentiel (206) en correspondance de son terminal de sortie (03), un premier terminal de conduction branché à ladite référence de tension d'alimentation (VDD) et un second terminal de conduction donnant une valeur de tension maximum (Vmax) dudit signal de tension d'entrée analogique modulé (V'in) ;

un circuit du filtre (209) introduit entre ledit second terminal de conduction dudit transistor d'entrée (Q1) et ledit autre référence de tension (VB) et comportant un filtre (Z1) et un transistor branché à diodes (Q2), ledit filtre (Z1) étant introduit entre ledit second terminal de conduction dudit transistor d'entrée (Q1) et un premier terminal de conduction dudit transistor branché à diodes (Q2) ayant à son tour un second terminal de conduction branché audit autre référence de tension (VB) et un terminal de contrôle branché audit filtre (Z1), ledit circuit du filtre (209) étant capable de prérégler une constante de temps dudit circuit générateur maximum (204) ; et

un circuit de conversion tension-courant (210) introduit entre ledit terminal de sortie (02) dudit second circuit de phase (208) et ledit autre référence de tension (VB) et ayant un terminal d'entrée branché audit circuit du filtre (209) et un terminal de sortie (05) branché en contre-réaction au terminal d'entrée susdit (I2) dudit circuit de phase d'entrée différentiel (206), ledit circuit de conversion tension-courant (210) transformant ladite valeur de tension maximum (Vmax) dudit signal de tension d'entrée analogique modulé (V'in) dans une valeur de courant maximum (I3).

**5.** Numériseur selon la revendication 4, **caractérisé en ce que** ledit circuit de conversion tension-courant (210) comporte un transistor buffer (Q3) et une résistance de dégénération (R3) y étant introduits, en série l'un par rapport à l'autre, entre ledit terminal de sortie (02) dudit circuit générateur maximum (204) et ladite autre référence de tension (VB) et interconnectés en correspondance dudit terminal de sortie (05) dudit circuit de conversion tension-courant (210), ledit transistor buffer (Q3) ayant un terminal de contrôle branché audit second terminal de conduction dudit transistor d'entrée (Q1) dudit second circuit de phase (208).

**6.** Numériseur selon la revendication 5, **caractérisé en ce que** ledit filtre (Z1) comporte au moins un condensateur (CI) et au moins une résistance (R1) y étant branchée, parallèlement l'un à l'autre, entre ledit second terminal de conduction dudit transistor d'entrée (Q1) et ledit premier terminal de conduction dudit transistor branché à diodes (Q2).

**7.** Numériseur selon les revendications 4 à 6, **caractérisé en ce que** ladite valeur de courant maximum (I3) donnée par ledit circuit de conversion tension-courant (210) est égale au rapport entre ladite valeur de tension maximum (Vmax) et une valeur de résistance de ladite résistance de dégénération (R3).

**8.** Numériseur selon chacune des revendications 1 à 7, **caractérisé en ce que** ledit circuit de référence de tension modulable (205) comporte :

un circuit du miroir de courant (211) introduit entre ladite référence de tension d'alimentation (VDD) et ledit terminal de sortie (OUTPUT') dudit circuit générateur maximum (204) et branché audit terminal d'inversion (-) dudit amplificateur opérationnel (203), en y donnant une valeur de courant maximum miroité (Imax), ceci étant une copie de ladite valeur de courant maximum (I3) donnée par ledit circuit de conversion tension-courant (210) ;

une source de courant (G2) introduite entre ladite référence de tension d'alimentation (VDD) et ledit terminal d'inversion (-) dudit amplificateur opérationnel (203); et

une résistance de sortie (R2) introduite entre ledit terminal d'inversion (-) dudit amplificateur opérationnel (203) et ledit second référence de tension (GND) ;

ledit circuit de référence de tension modulable (205) transmettant ledit signal de référence de tension modulable (V'REF) audit terminal d'inversion (-) dudit amplificateur opérationnel (203).

**9.** Numériseur selon la revendication 8, **caractérisé en ce que** ledit signal de référence de tension modulable (V'REF), transmis par ledit circuit de référence de tension modulable (205) a une valeur comprise entre la valeur la plus faible et la valeur la plus forte dudit signal de tension d'entrée analogique modulé (V'in).

**10.** Numériseur selon la revendication 9, **caractérisé en ce que** ledit signal de référence de tension modulable (V'REF) est égal à la somme de ladite valeur du courant maximum miroité (Imax) et la valeur (12) de ladite source de courant (G2), multipliée par la valeur de ladite résistance de sortie (R2).

**11.** Méthode pour numériser un signal de tension d'entrée analogique modulé (V'in) dans un système de réception numérique au moyen d'un numériseur, comportant les phases de :

transmission dudit signal de tension d'entrée analogique modulé (V'in) sur un terminal d'entrée (ENTREE') dudit numériseur (200);

génération d'un signal de tension de seuil depuis ledit signal de tension d'entrée analogique modulé (V'in) ;

comparaison dudit signal de tension d'entrée analogique modulé (V'in) et dudit signal de tension de seuil afin de générer un signal de tension de sortie (V'out), ceci étant une conversion numérique dudit signal de tension d'entrée (V'in), **caractérisée en ce que**

ladite phase de génération d'un signal de tension de seuil comporte les phases de détermination d'une valeur de tension maximum (Vmax) dudit signal de tension d'entrée analogique modulé (V'in) et de génération d'un signal de référence de tension modulable (V'REF) depuis ladite valeur de tension maximum (Vmax) étant adaptable audit signal de tension d'entrée analogique modulé (V'in).

**12.** Méthode selon la revendication 11, **caractérisée en ce que** ladite phase de détermination de ladite valeur de tension maximum (Vmax) comporte les phases de:

transfert dudit signal de tension d'entrée analogique modulé (V'in) à un terminal de sortie (03) d'un circuit de phase d'entrée différentiel (206); extraction de ladite valeur de tension maximum (Vmax) par filtration du signal tel qu'il est reçu dudit circuit de phase d'entrée différentiel (206) par un second circuit de phase (208); et conversion de ladite valeur de tension maximum (Vmax) dans une valeur de courant maximum (I3).

**13.** Méthode selon la revendication 12, **caractérisée en ce que** ladite phase de génération d'un signal de référence de tension modulable (V'REF) comporte les phases de:

miroitage de ladite valeur de courant maximum (I3) dans une valeur de courant maximum miroité (Imax);

somme de ladite valeur de courant maximum miroité (Imax) et d'une valeur de courant constant (I2);

conversion de ladite somme dans ledit signal de référence de tension modulable (V'REF).

## Claims

**1.** Digitizer (200) for a digital receiver system having an input terminal (INPUT') which receives a modulated analog input voltage signal (V'in) and an output terminal (OUTPUT') which provides an output voltage signal (V'out) being a digital conversion of said input voltage signal (V'in) and including:

a comparator circuit (201) having an output terminal connected to said output terminal (OUTPUT') of said digitizer (200) and including at least one operational amplifier (203) having a non inverting terminal (+) and an inverting terminal (-), said non inverting terminal (+) being coupled to said input terminal (INPUT') of said digitizer (200), and

a threshold generator circuit (202) inserted between said input terminal (INPUT') of said digitizer (200) and said non inverting terminal (+) of said operational amplifier (203), said threshold generator circuit (202) providing a tunable voltage reference signal (V'REF) at an output terminal (O1) to said inverting terminal (-) of said operational amplifier (203); **characterized in that** said threshold generator circuit (202) includes a series of maximum generator circuit (204) for determining a maximum voltage value (Vmax) of said modulated analog input voltage signal (V'in), and of a tunable voltage reference circuit (205) for generating said tunable voltage reference signal (V'REF) as a function of said maximum value of said modulated analog input voltage signal (V'in).

2. Digitizer according to claim 1, **characterized in that** said maximum generator circuit (204) has an output terminal (O2) connected to the input terminal of said tunable voltage reference circuit (205) and providing thereto a control signal (TUNING) being a function of said maximum value of said modulated analog input voltage signal (V'in).

3. Digitizer according to claim 2, **characterized in that** said maximum generator circuit (204) includes:

a differential input stage circuit (206) coupled to said input terminal (INPUT') of said digitizer (200);
a current mirror circuit (207) connected to a first supply voltage reference (VDD) and coupled to said differential input stage circuit (206);
a second stage circuit (208) coupled to said differential input stage circuit (206) in correspondence of at least an input terminal and an output terminal (I2, O3) thereof and connected to said output terminal (O2).

4. Digitizer according to claim 3, **characterized in that** said second stage circuit (208) is inserted between said voltage supply reference (VDD) and a further voltage reference (VB) and includes:

an input transistor (Q1) having a control terminal coupled to said differential input stage circuit (206) in correspondence of its output terminal (O3), a first conduction terminal connected to said supply voltage reference (VDD) and a second conduction terminal providing a maximum voltage value (Vmax) of said modulated analog input voltage signal (V'in);
a filter circuit (209) inserted between said second conduction terminal of said input transistor (Q1) and said further voltage reference (VB) and, including a filter (Z1) and a diode-connected transistor (Q2), said filter (Z1) being inserted between said second conduction terminal of said input transistor (Q1) and a first conduction terminal of said diode-connected transistor (Q2) having in turn a second conduction terminal connected to said further voltage reference (VB) and a control terminal connected to said filter (Z1), said filter circuit (209) being able to preset a time constant of said maximum generator circuit (204); and
a voltage-current converting circuit (210) inserted between said output terminal (O2) of said second stage circuit (208) and said further voltage reference (VB) and having an input terminal connected to said filter circuit (209) and an output terminal (O5) feedback connected to said input terminal (I2) of said differential input stage circuit (206), said voltage-current converting circuit (210) transforming said maximum voltage value (Vmax) of said modulated analog input voltage signal (V'in) into a maximum current value (I3).

5. Digitizer according to claim 4, **characterized in that** said voltage-current converting circuit (210) includes a buffer transistor (Q3) and a degeneration resistor (R3) inserted, in series to each other, between said output terminal (O2) of said maximum generator circuit (204) and said further voltage reference (VB) and interconnected in correspondence of said output terminal (O5) of said voltage-current converting circuit (210), said buffer transistor (Q3) having a control terminal connected to said second conduction terminal of said input transistor (Q1) of said second stage circuit (208).

6. Digitizer according to claim 5, **characterized in that** said filter (Z1) includes at least one capacitor (C1) and at least one resistor (R1) connected, in parallel to each other, between said second conduction terminal of said input transistor (Q1) and said first conduction terminal of said diode-connected transistor (Q2).

7. Digitizer according to claims 4-6, **characterized in that** said maximum current value (I3) provided by said voltage-current converting circuit (210) is equal to the ratio between said maximum voltage value (Vmax) and a resistance value of said degeneration resistor (R3).

8. Digitizer according to each of claims from 1 to 7, **characterized in that** said tunable voltage reference circuit (205) includes:

a current mirror circuit (211) inserted between said voltage supply reference (VDD) and said output terminal (OUTPUT') of said maximum generator circuit (204) and connected to said inverting terminal (-) of said operational amplifier (203), providing thereto a mirrored maximum current value (Imax), being a copy of said maximum current value (13) provided by said voltage-current converting circuit (210);

a current source (G2) inserted between said voltage supply reference (VDD) and said inverting terminal (-) of said operational amplifier (203); and

an output resistor (R2) inserted between said inverting terminal (-) of said operational amplifier (203) and said second voltage reference (GND); said tunable voltage reference circuit (205) providing said tunable voltage reference signal (V'REF) to said inverting terminal (-) of said operational amplifier (203).

9. Digitizer according to claim 8, **characterized in that** said tunable voltage reference signal (V'REF), provided by said tunable voltage reference circuit (205), has a value comprised between the lowest and the highest value of said modulated analog input voltage signal (V'in).

10. Digitizer according to claim 9, **characterized in that** said tunable voltage reference signal (V'REF) is equal to the sum of said mirrored maximum current value (Imax) and the value (12) of said current source (G2), multiplied for the value of said output resistor (R2).

11. Method for digitizing a modulated analog input voltage signal (V'in) in a digital receiver system by means of a digitizer, including the steps of:

providing said modulated analog input voltage signal (V'in) on an input terminal (INPUT) of said digitizer (200);

generating a threshold voltage signal from said modulated analog input voltage signal (V'in);

comparing said modulated analog input voltage signal (V'in) and said threshold voltage signal in order to generate an output voltage signal (V'out) being a digital conversion of said input voltage signal (V'in),

**characterized in that**

said step of generating a threshold voltage signal includes the steps of determining a maximum voltage value (Vmax) of said modulated analog input voltage signal (V'in) and generating a tunable voltage reference signal (V'REF) from said maximum voltage value (Vmax) being adaptable to said modulated analog input voltage signal (V'in).

12. Method according to claim 11, **characterized in that** said step of determining said maximum voltage value (Vmax) includes the steps of:

transferring said modulated analog input voltage signal (V'in) to an output terminal (O3) of a differential input stage circuit (206)

extracting said maximum voltage value (Vmax) by filtering the signal as received by said differential input stage circuit (206) through a second stage circuit (208); and

converting said maximum voltage value (Vmax) into a maximum current value (I3).

13. Method according to claim 12, **characterized in that** said step of generating a tunable voltage reference signal (V'REF) includes the steps of:

mirroring said maximum current value (13) in a mirrored maximum current value (Imax);

summing said mirrored maximum current value (Imax) to a constant current value (12);

converting said sum into said tunable reference voltage signal (V'REF).

**Patentansprüche**

1. Digitalisierer (200) für ein digitales Empfangssystem, umfassend einen Eingangsanschluss (INPUT') der ein moduliertes Analog-Eingangsspannungssignall (V'in) empfängt, und einen Ausgangsanschluss (OUTPUT'), der ein Ausgangsspannungssignal (V'out) abgibt, bei dem es sich um eine digitale Version des Eingangsspannungssignals (V'in) handelt, aufweisend:

eine Vergleicherschaltung (201) mit einem Ausgang, der an den Ausgangsanschluss (OUTPUT') des Digitalisierers (200) angeschlossen ist und mindestens einen Operationsverstärker (203) besitzt, der einen nicht-invertierten (+) Anschluss und einen invertierten (-) Anschluss besitzt, von denen der nicht-invertierte Anschluss (+) mit dem Eingangsanschluss (INPUT') des Digitalisierers (200) verbunden ist, und

eine Schwellengeberschaltung (202), die zwischen dem Eingangsanschluss (INPUT') des Digitalisierers (200) und dem nicht-invertierten (+) Eingang des Operationsverstärkers (203) liegt, und die ein modulierbares Referenzspannungssignal (V'REF) an einem Ausgangsanschluss (O1) an den invertierten (-) Anschluss des Operationsverstärkers (203) gibt;
**dadurch gekennzeichnet, dass**
die Schwellenwertgeberschaltung (202) eine Reihe von Maximalwert-Geberschaltungen (204) aufweist, um einen Maximum-Spannungswert (Vmax) des modulierten Analog-Eingangsspannungssignals (V'in) zu bestimmen, außerdem eine modulierbare Referenzspannungsschaltung (205) zum Erzeugen des modulierbaren Referenzspannungssignals (V'REF) als Funktion des Maximumwerts des modulierten Analog-Eingangsspannungssignals (V'in).

2. Digitalisierer nach Anspruch 1, **dadurch gekennzeichnet, dass** die Maximalwertgeberschaltung (204) einen Ausgangsanschluss (02) aufweist, der an den Eingangsanschluss der modulierbaren Referenzspannungsschaltung (205) angeschlossen ist und an diesen ein Steuersignal (TUNING) sendet, welches eine Funktion des Maximalwerts des modulierten Analog-Eingangsspannungssignals (V'in) ist.

3. Digitalisierer nach Anspruch 2, **dadurch gekennzeichnet, dass** die Maximalwert-Geberschaltung (204) aufweist:

eine Eingangsphasen-Differenzschaltung (205), die an den Eingangsanschluss (INPUT') des Digitalisierers (200) angeschlossen ist;
eine Stromspiegelschaltung (207), die an eine erste Versorgungs-Referenzspannung (VDD) angeschlossen und mit der Eingangsphasendifferenzschaltung (206) gekoppelt ist;
eine zweite Phasenschaltung (208), die mit der Eingangsphasen-Differenzschaltung (206) über mindestens einen Eingangsanschluss und einen Ausgangsanschluss (12, O3) von letzterer gekoppelt ist und mit dem Ausgangsanschluss (02) verbunden ist.

4. Digitalisierer nach Anspruch 3, **dadurch gekennzeichnet, dass** die zweite Phasenschaltung (208) zwischen die Versorgungs-Referenzspannung (VDD) und eine weitere Referenzspannung (VB) eingefügt ist und ausweist:

einen Eingangstransistor (Q1) mit einem an die Eingangsphasen-Differenzschaltung (206) über deren Ausgangsanschluss (Q3) gekoppelten Steueranschluss, einem ersten Leitungsanschluss, der an die Versorgungs-Referenzspannung (VDD) angeschlossen ist, und einen zweiten Leitungsanschluss, der einen Maximum-Spannungswert (Vmax) des modulierten Analog-Eingangsspannungssignals (V'in) vorgibt;
eine Filterschaltung (209), die zwischen dem zweiten Leitungsanschluss des Eingangstransistors (Q1) und der weiteren Referenzspannung (VB) liegt und ein Filter (Z1) und einen als Diode geschalteten Transistor (Q2) aufweist, von denen das Filter (Z1) zwischen den zweiten Leitungsanschluss des Eingangstransistors (Q1) und einen ersten Leitungsanschluss des als Diode geschalteten Transistors (Q2) eingefügt ist, wobei letzterer seinerseits einen Leitungsanschluss besitzt, der an die weitere Referenzspannung (VB) angeschlossen ist, und einen Steueranschluss aufweist, der an das Filter (Z1) angeschlossen ist, wobei die Filterschaltung (209) in der Lage ist, eine Zeitkonstante der Maximalwertgeberschaltung (204) voreinzustellen; und
eine Spannungs-Strom-Wandlerschaltung (210), die zwischen den Ausgangsanschluss (02) der zweiten Phasenschaltung (208) und die weitere Referenzspannung (VB) geschaltet ist und einen Eingangsanschluss besitzt, der an die Filterschaltung (209) angeschlossen ist, und einen Ausgangsanschluss besitzt, der als Gegenkopplung an den erwähnten Eingangsanschluss (12) der Eingangs-Phasendifferenzschaltung (206) gekoppelt ist, wobei die Spannungs-Strom-Wandlerschaltung (210) den Maximum-Spannungswert (Vmax) des modulierten Analog-Eingangsspannungssignals (V'in) in einen Maximum-Stromwert (13) umsetzt.

5. Digitalisierer nach Anspruch 4, **dadurch gekennzeichnet, dass** die Spannungs-Strom-Wandlerschaltung (210) einen Puffertransistor (Q3) und einen Degenerationswiderstand (R3) aufweist, die in die Wandlerschaltung in Reihe zueinander zwischen dem Ausgangsanschluss (02) der Maximalwert-Geberschaltung (204) und der weiteren Referenzspannung (VB) eingefügt und über den Ausgangsanschluss (Q5) der Spannungs-Strom-Wandlerschaltung (210) verbunden sind, wobei der Puffertransistor (Q3) mit einem Steueranschluss an den zweiten Leitungsanschluss des Eingangstransistors (Q1) der zweiten Phasenschaltung (208) angeschlossen ist.

6. Digitalisierer, nach Anspruchs, **dadurch gekennzeichnet, dass** das Filter (Z1) mindestens eine Kapazität (C1) und mindestens einen Widerstand (R1) aufweist, die zueinander parallel geschaltet zwischen dem zweiten Leitungsanschluss des Eingangswiderstands (Q1) und dem ersten Leitungsanschluss des als Diode geschalteten Transistors (Q2) liegen.

7. Digitalisierer nach den Ansprüchen 4 bis 6, **dadurch gekennzeichnet, dass** der durch die Spannungs-Strom-Wandlerschaltung (210) vorgegebene Maximum-Stromwert (13) dem Verhältnis zwischen dem Maximum-Spannungswert (Vmax) und einem Widerstandswert des Degenerationswiderstands (R3) gleicht.

8. Digitalisierer nach jedem der Ansprüche 1 bis 7, **dadurch gekennzeichnet, dass** die modulierbare Referenzspannungsquelle (205) aufweist;
   eine Stromspiegelschaltung (211), die zwischen der Versorgungs-Referenzspannung (VDD) und dem Ausgangsanschluss (OUTPUT') der Maximalwert-Geberschaltung (208) liegt und an den invertierten Anschluss (-) des Operationsverstärkers (203) angeschlossen ist, um diesem einen gespiegelten Maximum-Stromwert (Imax) zuzuführen, bei dem es sich um eine Kopie des Maximum-Stromwerts (13) handelt, der durch die Spannungs-Strom-Wandlerschaltung (210) vorgegeben wird;
   eine Stromquelle (G2), die zwischen der Versorgungs-Referenzspannung (VDD) und dem invertierten Anschluss (-) des Operationsverstärkers (203) liegt; und einen Ausgangswiderstand (R2), der zwischen dem invertierten Anschluss des Operationsverstärkers (3) und der zweiten Referenzspannung (GND) liegt;
   wobei die modulierbare Referenzspannungsschaltung (205) das modulierbare Referenzspannungssignal (V'REF) an den invertierten Eingang (-) des Operationsverstärkers (203) gibt.

9. Digitalisierer nach Anspruch 8, **dadurch gekennzeichnet, dass** das modulierbare Referenzspannungssignal (V'REF), welches von der modulierbaren Referenzspannungsschaltung (205) geliefert wird, einen Wert aufweist, der zwischen dem kleinstmöglichen und dem größtmögliche Wert des modulierten Analog-Eingangsspannungssignal (V'in) liegt.

10. Digitalisierer nach Anspruch 9, **dadurch gekennzeichnet, dass** das modulierbare Referenzspannungssignal (VREF) gleich ist der Summe des gespiegelten Maximum-Stromwerts (Imax) und des Werts (12) der Stromquelle (G2), multipliziert mit dem Wert des Ausgangswiderstands (R2).

11. Verfahren zum Digitalisieren eines modulierten Analog-Eingangsspannungssignals (V'im) in einem Digital-Empfangssystem mit Hilfe eines Digitalisierers, umfassend folgende Schritte:

   das modulierte Analog-Eingangsspannungssignal (V'in) wird auf einen Eingangsanschluss (ENTREE') des Digitalisierers (200) gegeben;
   aus dem modulierten Analog-Eingangsspannungssignal (V'in) wird ein Schwellenspannungssignal erzeugt;
   das modulierte Analog-Eingangsspannungssignal (V'in) und das Schwellenspannungssignal werden verglichen, um ein Ausgangsspannungssignal (V'out) zu erzeugen, bei dem es sich um eine digitalisierte Umsetzung des Eingangsspannungssignals (V'in) handelt,
   **dadurch gekennzeichnet, dass** der Schritt des Erzeugens eines Schwellenspannungssignals die Schritte des Bestimmens eines Maximum-Spannungswerts (Vmax) des modulierten Analog-Eingangsspannungssignals (V'in) und der Erzeugung eines modulierbaren Referenzspannungssignals (V'REF) umfasst, um den Maximum-Spannungswert (Vmax) an das modulierte Analog-Eingangsspannungssignal (V'in) anzupassen.

12. Verfahren nach Anspruch 11, **dadurch gekennzeichnet, dass** der Schritt des Bestimmens des Maximum-Spannungswerts (Vmax) folgende Schritte beinhaltet:

   Transferieren des modulierten Analog-Eingangsspannungssignals (V'in) an einen Ausgangsanschluss (03) einer Eingangs-Phasendifferenzschaltung (206);
   Extrahieren des Maximum-Spannungswerts (Vmax) durch Filtern des Signals, welches von der Eingangs-Phasendifferenzschaltung (206) empfangen wird, durch eine zweite Phasenschaltung (208); und
   Umsetzen des Maximum-Spannungswerts (Vmax) in einen Maximum-Stromwert (13).

13. Verfahren nach Anspruch 12, **dadurch gekennzeichnet, dass** der Schritt des Erzeugens des modulierbaren Referenzspannungssignals (V'REF) folgende Schritte beinhaltet:

   Spiegeln des Maximum-Stromwerts (13) in einen gespiegelten Maximum-Stromwert (Imax).
   Summieren des gespiegelten Maximum-Stromwerts (12);
   Umsetzen der Summe in das modulierbare Referenzspannungssignal (V'REF).

FIG. 1
ART ANTÉRIEUR

EP 1 993 209 B1

FIG. 2

FIG. 3

EP 1 993 209 B1

FIG. 4

FIG. 5

**EP 1 993 209 B1**